# FASCICULE DE BREVET EUROPEEN

(11) **EP 0 979 671 B1**
(45) Date de publication et mention de la délivrance du brevet: **16.06.2004**
(21) Numéro de dépôt: 99402035.2
(22) Date de dépôt: 11.08.1999
(51) Int. Cl.: B01D 53/14, C01B 7/07, C25B 1/26

(54) **Procédé et dispositif de purification de chlore gazeux pollué par du brome**
Verfahren und Vorrichtung zur Reinigung von Brom-belastetem Chlorgas
Process and apparatus for purification of chlorine gas contaminated with bromine

(30) Priorité: 11.08.1998 FR 9810284
(43) Date de publication de la demande: 16.02.2000
(73) Titulaire: Krebs-Speichim, 92800 Puteaux (FR); Aragonesas Industrias Y Energia, S.A., 28004 Madrid (ES)
(72) Inventeur: Dietrich, Marc, 78610 Auffargis (FR); Benkahla, Ben Aissa, 78760 Voisins le Bretonneux (FR); Otal, José Vicente, 28003 Madrid (ES); Hernandez, José Luis, 22600 Sabinanigo (Huesca) (ES)
(74) Mandataire: Lanceplaine, Jean-Claude

(56) Documents cités:
- DE-A- 19 726 531
- DE-B- 1 163 785
- US-A- 3 660 261

## Description

La présente invention a pour objet un procédé et un dispositif de purification de chlore gazeux pollué par du brome. Elle a plus précisément pour objet, d'une part, un procédé de purification d'un flux de chlore gazeux, visant à éliminer dudit flux le brome qu'il contient et, d'autre part, un dispositif convenant à la mise en oeuvre d'une variante avantageuse dudit procédé.

L'homme du métier n'ignore pas que le chlore gazeux est généralement obtenu par électrolyse d'une saumure saturée en chlorure de métal alcalin, généralement en chlorure de sodium ou chlorure de potassium. Ladite saumure est préparée à partir de sel gemme ou de sel marin. Elle contient de ce fait, inéluctablement, en mélange avec le chlorure de métal alcalin, du bromure de ce même métal alcalin. Quel que soit le mode de mise en oeuvre de l'électrolyse (électrolyse au mercure, électrolyse à diaphragme, électrolyse à membrane), on retrouve donc, dans le flux de chlore gazeux produit, du brome. On en retrouve des teneurs allant de moins de 100 ppm à plus de 1 500 ppm, suivant le nature du sel utilisé. Des concentrations de l'ordre de 250 ppm sont en général présentes dans le chlore gazeux lorsque l'on utilise, pour la saturation de la saumure, du chlorure de sodium, non traité préalablement.

Ce brome gène considérablement certains utilisateurs du chlore. Il est notamment susceptible de poser des problèmes au niveau de la qualité, de la coloration, de produits industriels préparés avec ledit chlore. On a souhaité, dans ce contexte, disposer de chlore, renfermant moins de 50 ppm de brome.

Le problème technique, abordé par les Demanderesses, a donc été celui de la purification d'un flux de chlore gazeux pollué par du brome.

Dans la demande de brevet JP-A-59 92 903, on a décrit une méthode de purification du chlore renfermant moins de 2 500 ppm de brome. Ladite méthode consiste en le lavage à l'eau dudit chlore. Cette méthode est *per se* satisfaisante mais sa mise en oeuvre, à l'échelle industrielle, soulève des difficultés. Elle implique une grande consommation d'eau et d'énergie pour le lavage du gaz et pose le problème du recyclage de ladite eau.

Les Demanderesses ont tout d'abord songé à mettre en oeuvre, sur le flux de chlore pollué par le brome, liquéfié, une distillation fractionnée. Ceci s'est révélé délicat, du fait de la présence de bromure de chlore et, en tout état de cause, dangereux.

Elles ont alors développé le concept original de la présente invention qui est basé sur le lavage du flux de chlore pollué par de la saumure, appauvrie en sel, issue de l'électrolyse. De façon tout à fait surprenante, un tel lavage à la saumure appauvrie en sel s'est révélé non seulement possible mais particulièrement performant et avantageux. On obtient notamment de meilleurs résultats, sans générer de volumes d'eau polluée supplémentaires, quant à la quantité de brome récupérée à l'issue dudit lavage à la saumure, par rapport à ceux obtenus à l'issue d'un lavage à l'eau. La quantité de brome récupérée peut être valorisée et il est par ailleurs possible d'optimiser, du point de vue énergétique, la mise en oeuvre dudit lavage à la saumure. L'homme du métier ne manquera pas de saisir tout l'intérêt de l'invention à la considération de la description générale qui en est faite ci-après et de la description détaillée qui est faite ensuite, en référence aux figures annexées, de façon non limitative.

Selon l'invention, on propose donc un procédé original de purification d'un flux de chlore gazeux pollué par du brome. Ledit procédé comprend le lavage dudit flux avec une solution aqueuse. De façon caractéristique, ledit lavage est mis en oeuvre avec, à titre de solution aqueuse, de la saumure appauvrie en sel, prélevée en aval des électrolyseurs d'une unité de production de chlore gazeux par électrolyse d'une saumure (généralement saturée en NaCl ou KCl).

Le procédé de purification préconisé qui peut être qualifié de procédé de débromation est un procédé de purification par lavage avec une solution aqueuse. Il est original de par la nature de ladite solution aqueuse. Celle-ci consiste en de la saumure appauvrie en sel, prélevée en aval des électrolyseurs d'une unité de production de chlore par électrolyse. Ladite unité consiste généralement en une boucle d'électrolyse - de la saumure saturée en chlorure de métal alcalin est constituée puis électrolysée, de la saumure appauvrie en sel est récupérée à l'issue de l'électrolyse puis est recyclée pour générer de la saumure saturée - et la saumure appauvrie utile à la mise en oeuvre du lavage selon l'invention est donc généralement prélevée en aval des électrolyseurs, dans la boucle de recyclage de ladite saumure appauvrie.

On a parlé des électrolyseurs d'une unité de production de chlore par électrolyse d'une saumure dans la mesure où de telles unités renferment généralement plusieurs électrolyseurs en parallèle. On comprend que ce pluriel n'est nullement limitatif et que l'invention peut tout aussi bien se décliner avec de la saumure appauvrie en sel issue d'un unique électrolyseur.

Le lavage du chlore gazeux selon l'invention - lavage *per se* classique, original de par la nature de la solution de lavage intervenant - est avantageusement mis en oeuvre avec circulation, à contre-courant, des flux gazeux et liquide. Selon une variante préférée, il est mis en oeuvre sur un flux ascendant de chlore gazeux, par un flux descendant de saumure appauvrie en sel.

Le lavage à la saumure ou débromation originale de l'invention est généralement mis en oeuvre, avec une saumure appauvrie en sel, dont la température est comprise entre 10 et 35°C, de préférence entre 15 et 20°C. Ladite saumure est envoyée dans une colonne adéquate, avantageusement, comme indiqué ci-dessus, à contre-courant du flux de chlore à purifier. Ledit flux intervient généralement lui, à une température de 35 à 40°C.

Ledit lavage à la saumure peut être directement greffé sur une unité de production de chlore par électrolyse et fonctionner en même temps que celle-ci. Dans une telle hypothèse, avant la mise en oeuvre du lavage, en aval des électrolyseurs, les flux de chlore et de saumure sont refroidis.

Ledit lavage à la saumure peut être mis en oeuvre indépendamment du fonctionnement de l'unité de production de chlore; ledit chlore, avant son lavage, ayant été stocké sous forme liquide, en pression à température ambiante ou à la pression atmosphérique à environ -30°C ; ladite saumure intervenant à une température adéquate sur ledit chlore vaporisé en sortie de son stockage; ladite saumure provenant ou pas de la même unité de production de chlore.

Ledit lavage à la saumure peut encore être mis en oeuvre de façon semi-dépendante de la production du chlore : la saumure provenant directement de la boucle d'électrolyse et le chlore d'une unité de stockage ou le chlore provenant directement de la boucle d'électrolyse et la saumure d'une unité de stockage, par exemple.

On conçoit que le procédé original de débromation de l'invention, par lavage à la saumure appauvrie, peut se décliner dans de nombreux contextes différents. On précise d'ores et déjà qu'il est avantageusement mis en oeuvre sur le site d'une unité de production de chlore par électrolyse, directement greffé, semi-greffé ou non greffé sur ladite unité...

La saumure appauvrie, intervenue selon l'invention, pour le lavage du flux de chlore chargé en brome, est, à l'issue de la mise en oeuvre dudit lavage, chargée, à son tour, en brome et en chlore. Dans le cadre du procédé de l'invention, elle est avantageusement débarrassée desdits brome et chlore. Ceci peut aisément être réalisé par un stripage (ou stripping) de ladite saumure. Un tel procédé est familier à l'homme du métier. Il peut notamment être mis en oeuvre selon deux principales variantes : stripage avec de la vapeur d'eau sous vide ou stripage avec un gaz, avantageusement de l'air. La première desdites variantes est généralement préférée.

Cette possibilité de "régénérer" ladite saumure appauvrie tout en récupérant un flux gazeux enrichi en brome est particulièrement intéressante. A partir dudit flux gazeux enrichi en brome, on peut aisément, par condensation, récupérer et valoriser ledit brome.

La mise en oeuvre de la débromation selon l'invention est donc particulièrement avantageuse. Elle ne pollue pas de flux supplémentaire. Elle peut être mise en oeuvre avec recyclage de la saumure appauvrie en sel, utilisée pour ladite débromation et permet aisément de récupérer à la fois du chlore débromé et du brome déchloré.

On a déjà vu que ladite débromation par lavage à la saumure est avantageusement mise en oeuvre sur le site d'une unité de production de chlore par électrolyse d'une saumure, en pouvant notamment être directement, totalement (la débromation est mise en oeuvre en même temps que l'électrolyse avec le flux de chlore produit traité par un flux de saumure directement prélevé sur la boucle d'électrolyse) ou partiellement (la débromation est mise en oeuvre en même temps que l'électrolyse avec seulement un des flux de chlore ou de saumure directement prélevé sur la boucle d'électrolyse), greffée à ladite unité de production.

Dans un tel contexte, la saumure appauvrie en sel, utilisée pour ladite débromation, peut être directement prélevée sur ladite unité, en général sur la boucle d'électrolyse. Elle est alors refroidie, avant la mise en oeuvre du lavage et les calories dégagées peuvent être opportunément récupérées pour le stripage, en aval dudit lavage, de ladite saumure, visant à la débarrasser du brome et du chlore dont elle s'est chargée.

Ainsi, selon une variante particulièrement préférée de mise en oeuvre du procédé de l'invention, la saumure appauvrie en sel (prélevée directement sur une boucle d'électrolyse) est refroidie avant la mise en oeuvre de la débromation par lavage et ladite saumure appauvrie, chargée en brome et en chlore, à l'issue dudit lavage est strippée ; les calories provenant du refroidissement de ladite saumure appauvrie étant avantageusement utilisées pour la mise en oeuvre dudit stripage.

Avantageusement, la saumure appauvrie, "régénérée" par ledit stripage (stripage, mis en oeuvre, avec ou sans, avantageusement avec, récupération de calories (voir ci-dessus)), est recyclée en amont des électrolyseurs. Le procédé de débromation de l'invention peut ainsi se greffer, sans la perturber, sur une boucle d'électrolyse de l'art antérieur. On prévoit, de façon classique, au moins une purge sur le circuit de recyclage de ladite saumure appauvrie, purge destinée à éviter l'accumulation des impuretés dans la boucle d'électrolyse.

Les Demanderesses préconisent tout particulièrement la mise en oeuvre de la débromation selon l'invention, avec greffage direct, total ou partiel, sur une boucle d'électrolyse, avec mise en oeuvre du stripage sur la saumure appauvrie utilisée pour ladite débromation et recyclage de celle-ci.

On se propose maintenant de décrire l'invention sous son aspect dispositif.

Pour la mise en oeuvre selon l'invention, de la débromation par lavage à la saumure appauvrie en sel, il intervient évidemment une colonne de lavage adéquate, colonne prévue pour le lavage d'un gaz par un liquide. Ladite colonne est avantageusement agencée pour la mise en oeuvre dudit lavage, à contre-courant. On a compris qu'à ladite colonne de lavage, on associe avantageusement une unité de stripage pour régénérer la saumure appauvrie qui s'est chargée en brome et en chlore au cours dudit lavage...

On a vu que ladite débromation selon l'invention est avantageusement directement greffée sur une unité de production de chlore par électrolyse. Ainsi, selon son deuxième objet, ladite invention concerne-t-elle un dispositif convenant à la mise en oeuvre de ladite débromation, dispositif qui comprend :
- une unité de production de chlore gazeux par électrolyse d'une saumure, ladite unité comprenant des électrolyseurs ;
- une colonne de lavage dudit chlore gazeux produit,
- un circuit d'amenée d'une fraction de la saumure appauvrie en sel, prélevée en aval desdits électrolyseurs, dans ladite colonne de lavage.

Ladite unité de production de chlore gazeux par électrolyse d'une saumure est d'un type classique. Elle consiste généralement en une boucle d'électrolyse qui inclut, montés en série, un bac de préparation d'une saumure saturée en chlorure de métal alcalin, au moins une unité de traitement chimique de ladite saumure pour en éliminer certaines impuretés, (au moins un électrolyseur et généralement) plusieurs électrolyseurs montés en parallèle, un circuit de recyclage de la saumure issue de l'électrolyse - saumure appauvrie en sel - vers ledit bac de préparation ; ledit circuit de recyclage comprenant avantageusement une unité de déchloration de ladite saumure appauvrie en sel, au sortir des électrolyseurs, et au moins une purge. Ladite boucle d'électrolyse comprend également, de façon classique, dans le contexte d'une électrolyse à membrane, au moins une unité de traitement de la saumure sur résine échangeuse d'ions, en amont des électrolyseurs à membrane, en aval de l'(des) unité(s) de traitement chimique de ladite saumure.

De façon caractéristique, selon l'invention, on greffe sur ladite unité une colonne de lavage du chlore gazeux produit, ladite colonne étant alimentée, en liquide de lavage, par de la saumure appauvrie en sel, prélevée en aval des électrolyseurs, avantageusement en aval de l'unité de déchloration de ladite saumure appauvrie en sel.

Ladite colonne de lavage est avantageusement agencée pour mettre en oeuvre le lavage du flux gazeux à contre-courant. Selon une variante préférée, le circuit d'amenée de la saumure de lavage débouche en partie haute de la colonne tandis que le flux gazeux à purifier est délivré en partie basse de ladite colonne.

Le dispositif essentiellement constitué de l'unité de production de chlore gazeux par électrolyse sur laquelle on a greffé, selon l'invention, ladite colonne de lavage ou débromation du chlore produit comporte avantageusement en outre une unité de stripage, destinée à la mise en oeuvre d'un stripage sur la fraction de saumure appauvrie, chargée en brome et en chlore, issue de ladite colonne de lavage (utilisée pour ledit lavage).

On a vu précédemment que la mise en oeuvre dudit stripage pouvait être optimisée du point de vue énergétique. Ainsi, le dispositif de l'invention qui inclut avantageusement l'unité de stripage, associe-t-il avantageusement à ladite unité, un échangeur de chaleur, agencé sur le circuit d'amenée de la fraction de saumure appauvrie en sel à la colonne de lavage, destiné à refroidir ladite fraction de saumure appauvrie en sel (avant son utilisation dans ladite colonne de lavage) et à réchauffer la fraction de saumure appauvrie correspondante, issue de ladite colonne de lavage (après son utilisation dans ladite colonne de lavage, chargée en brome et en chlore), avant son entrée dans ladite unité de stripage (où elle est débarrassée desdits brome et chlore).

On prévoit avantageusement, comme précisé ci-dessus, le recyclage de la saumure régénérée. Le dispositif de l'invention inclut donc généralement, en sus de ladite unité de stripage (ou unité de régénération de la fraction de saumure utilisée pour le lavage du chlore), un circuit de recyclage de la saumure appauvrie issue de ladite unité de stripage vers l'amont des électrolyseurs, généralement vers le bac de préparation de la saumure saturée en chlorure de métal alcalin, destinée à alimenter les électrolyseurs. Sur ledit circuit de recyclage, on prévoit au moins une purge.

Au moins une partie dudit circuit de recyclage de la saumure appauvrie en sel, régénérée, (provenant de l'unité de stripage) est avantageusement commune au circuit de recyclage classique de la saumure appauvrie en sel de la boucle d'électrolyse. En d'autres termes, la fraction de saumure appauvrie en sel qui a été prélevée, selon l'invention, pour la mise en oeuvre de la débromation, est avantageusement recyclée en amont des électrolyseurs en étant réunie avec la fraction de saumure appauvrie recyclée classiquement (non utilisée aux fins de l'invention).

L'invention, sous ses deux aspects de procédé et de dispositif, est maintenant décrite, de façon nullement limitative, en référence aux deux figures annexées.

La figure 1 est un schéma de principe du procédé de l'invention, greffé directement, totalement, sur un procédé classique de production de chlore gazeux par électrolyse.

La figure 2 montre schématiquement une installation convenant à une mise en oeuvre avantageuse du procédé de l'invention (procédé de débromation d'un flux de chlore gazeux). Ladite figure 2 est décrite, de façon nullement limitative, dans le contexte de la figure 1. On trouve donc sur lesdites figures 1 et 2 des références communes.

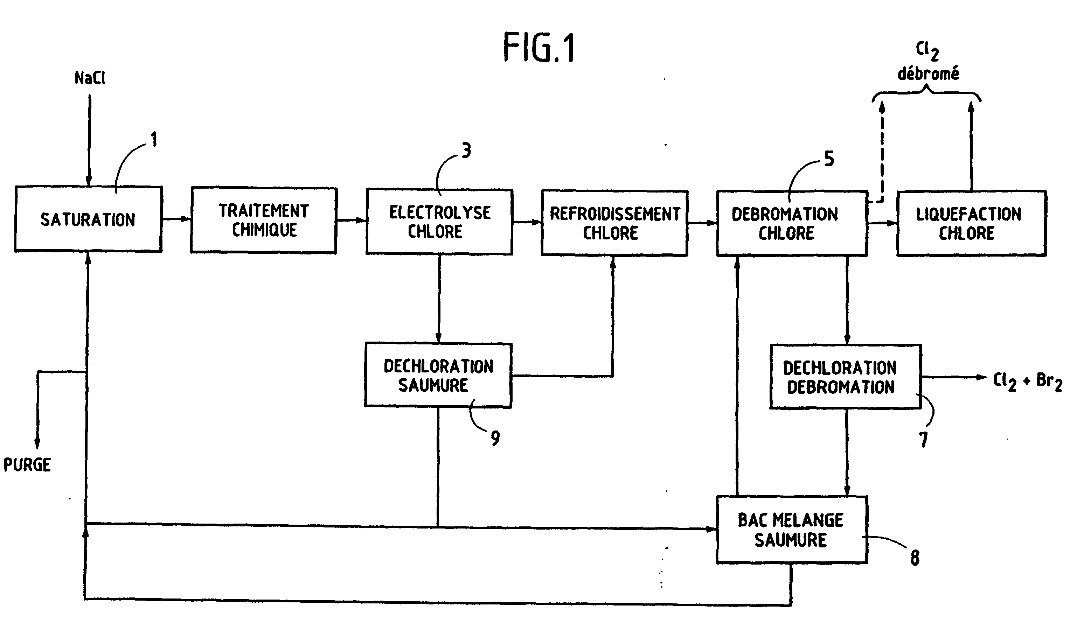

Sur la partie gauche de la figure 1, on retrouve une boucle d'électrolyse classique d'une saumure adéquate. Ladite saumure est préparée - maintenue à saturation par ajout de chlorure de métal alcalin : NaCl - dans un bac de saturation 1. Elle subit ensuite un traitement chimique destiné à la purifier, avant son introduction dans les électrolyseurs 3. Ledit traitement ne parvient pas à la débarrasser totalement des impuretés dont elle est chargée et notamment du brome qui a été inéluctablement introduit avec le chlorure de métal alcalin. Dans lesdits électrolyseurs 3, ladite saumure s'appauvrit en sel et génère un flux de chlore gazeux. Ledit flux de chlore, pollué par ledit brome, est refroidi en aval de l'électrolyse. La saumure appauvrie en sel, issue des électrolyseurs 3, est classiquement recyclée vers le bac de saturation 1. En fait, sur le circuit de recyclage, on trouve :
- une unité de déchloration 9 de ladite saumure appauvrie en sel : cette dernière sort de l'électrolyse, saturée en chlore gazeux et il est particulièrement judicieux de la déchlorer (on met généralement en oeuvre une déchloration sous vide). Le chlore récupéré lors de cette déchloration de la saumure appauvrie en sel est mélangé au chlore directement issu de l'électrolyse, au niveau des moyens de refroidissement de celui-ci ;
- une purge de ladite saumure appauvrie en sel : par le biais de ladite purge, on évite l'accumulation des impuretés, et notamment celle des sulfates, dans la boucle d'électrolyse.

Sur la partie droite de la figure 1, on trouve, schématisée, une variante de mise en oeuvre préférée du procédé de débromation de l'invention. Selon celle-ci, le flux de chlore gazeux, sortant des électrolyseurs 3 est, après refroidissement, débromé. Le brome contenu dans ledit flux est extrait de celui-ci, de façon caractéristique, par mise en contact, à contre-courant, dans une colonne à garnissage 5, dudit flux, avec un flux de saumure appauvrie en sel, prélevé sur la boucle de recyclage de ladite saumure appauvrie en sel, déchlorée en 9. Le chlore gazeux, ainsi débromé par lavage à la saumure appauvrie en sel, est liquéfié pour son stockage ou envoyé directement vers l'utilisateur.

La saumure appauvrie en sel qui a servi à l'extraction du brome précitée en 5 se trouve chargée en brome et en chlore. Ledit brome et ledit chlore sont extraits, par stripage (ou stripping) sous vide, dans un dégazeur 7. Ils sont récupérés à la sortie dudit dégazeur 7. La saumure appauvrie en sel, ainsi déchlorée et débromée, issue de 7, est mélangée dans un bac de mélange 8 à de la saumure appauvrie en sel prélevée sur la boucle de recyclage. Le mélange des saumures appauvries en sel, constitué en 8, est ainsi en partie utilisé pour l'extraction du brome dans la colonne à garnissage 5 et en partie recyclé vers le bac de saturation 1. On rappelle qu'une purge est prévue sur la ligne de recyclage.

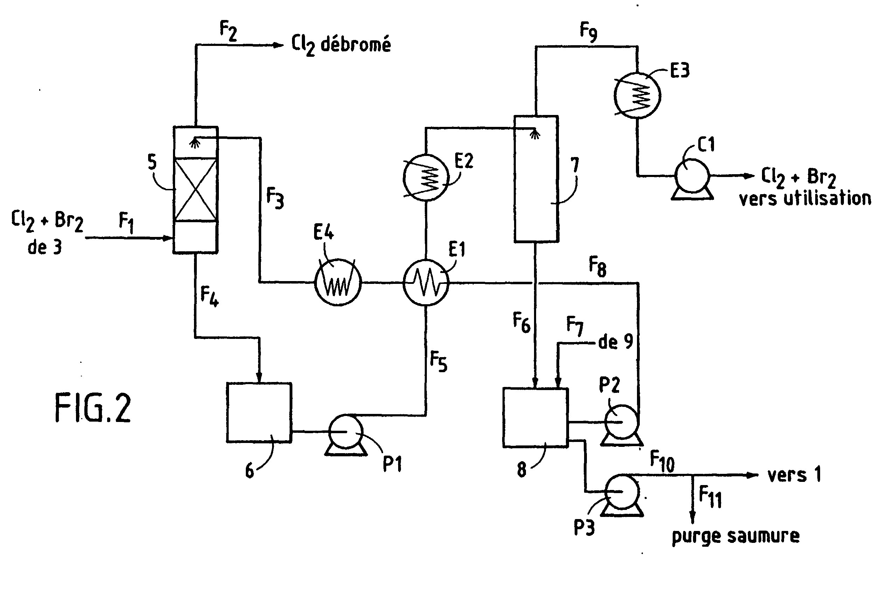

En référence maintenant à la figure 2, on précise la débromation mise en oeuvre selon l'invention sur un flux F₁ de chlore gazeux pollué par du brome ; présentement, de façon nullement limitative, flux F₁ issu des électrolyseurs 3 de la figure 1. On décrit ladite figure 2 en précisant, de façon nullement limitative, les paramètres du procédé de débromation. Lesdits paramètres correspondent à un contexte d'électrolyse d'une saumure saturée en NaCl. L'homme du métier comprend aisément que la débromation, illustrée sur ladite figure 2, n'est nullement limitée à ce contexte.

Le flux F₁ de chlore chargé en brome (dont la teneur en brome est généralement comprise entre 250 et 400 ppm) est envoyé au bas de la colonne à garnissage 5 où circule à contre-courant un débit F₃ de saumure appauvrie en sel (dont la teneur en NaCl est généralement voisine de 200 g/l) et refroidie (dont la température est généralement comprise entre 10 et 35°C, de préférence comprise entre 15 et 20°C).

En sortie de colonne 5, le flux gazeux débromé F₂ a généralement une teneur en brome inférieure à 100 ppm, préférentiellement inférieure à 50 ppm. Il est envoyé vers les unités de traitement (séchage, filtration, compression et liquéfaction) puis vers l'utilisateur ou directement vers l'utilisateur.

Le flux F₄ de saumure chargée en chlore et en brome (teneur généralement inférieure à 100 ppm, de préférence inférieure à 50 ppm) est reçu dans un bac 6. Un flux F₅ est envoyé dudit bac 6 par la pompe P1 vers la colonne de stripage (ou stripping) sous vide 7. Ce flux de saumure F₅ est réchauffé, généralement entre 80 et 95°C, de préférence entre 90 et 95°C, dans l'économiseur E1 puis dans l'échangeur E2 à l'aide de vapeur.

Une pompe à vide C1 permet d'assurer en haut de la colonne 7 un vide compris généralement entre 0,3 et 0,4 bar, vide qui permet le stripage (ou stripping) du chlore et du brome, à l'aide de vapeur d'eau dans le flux F₉ sortant de 7.

Le condenseur E3 assure le refroidissement de ce flux gazeux F₉, généralement entre 15 et 35°C, préférentiellement entre 20 et 25°C.

En sortie de la colonne 7, le flux de saumure F₆ est mélangé dans le bac 8 avec un flux de saumure appauvrie en sel F₇ venant des électrolyseurs 3, plus précisément de l'unité de déchloration 9.

La pompe P2 recycle un flux F₈ de la saumure du bac 8 vers l'économiseur E1, où elle réchauffe le flux de saumure F₅, puis vers l'échangeur refroidisseur E4 où est régulée la température du flux de saumure F₃. Ledit flux F₈ diffère du flux F₃ par sa température.

A partir du bac 8, une pompe P3 recycle l'excédent de saumure - un flux F₁₀ - vers la boucle d'électrolyse. Une partie de ce flux F₁₀ (un flux F₁₁) est purgé. Cette purge (purge sulfate) participe aussi à l'élimination du brome de la saumure.

L'invention est plus précisément illustrée par le tableau de chiffres ci-après. Ces chiffres exemplifient une mise en oeuvre du procédé de l'invention dans un dispositif tel que schématisé sur la figure 2 ; ledit procédé de l'invention étant directement greffé sur un procédé classique de production de chlore par électrolyse (voir la figure 1) d'une saumure saturée en NaCl. A la considération desdits chiffres, l'homme du métier ne manque pas de saisir l'intérêt de l'invention.

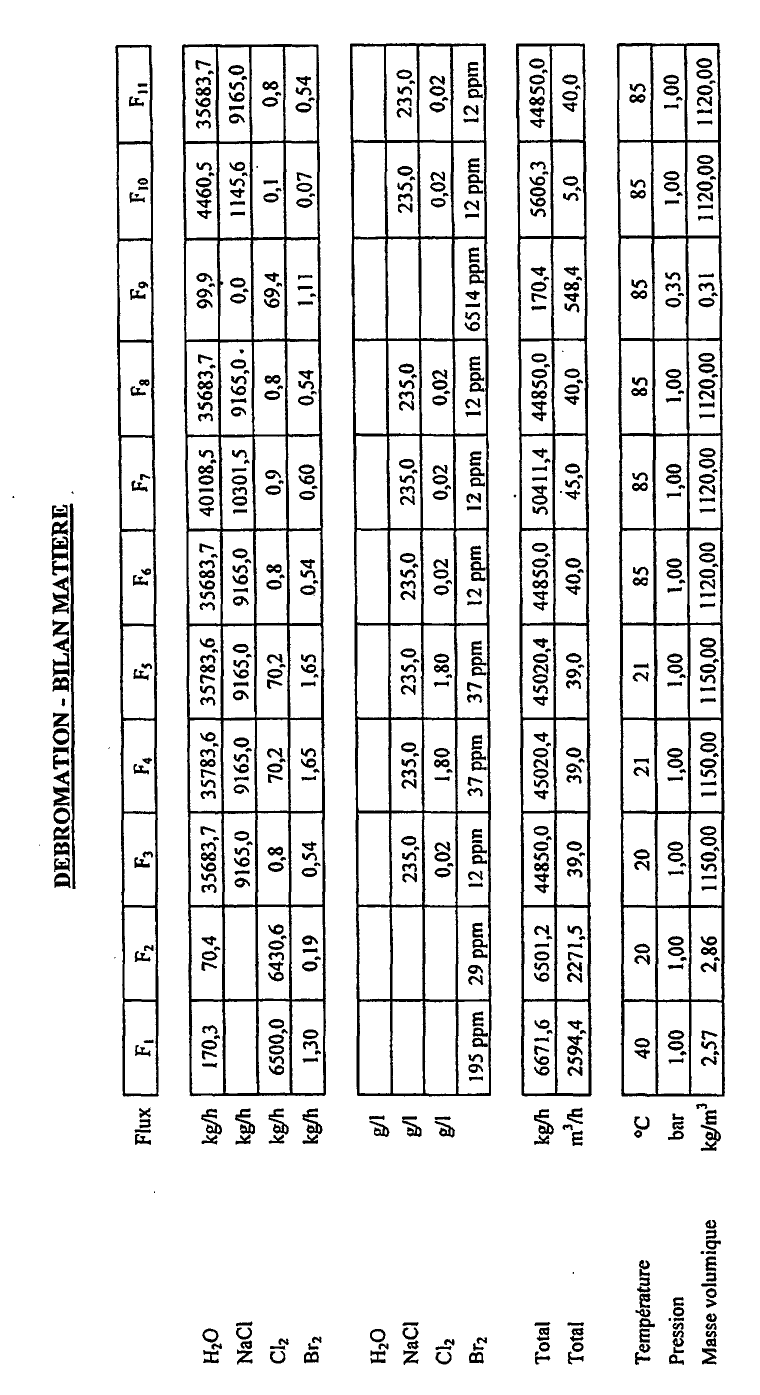

## Revendications

1. Procédé de purification d'un flux de chlore gazeux, visant à éliminer dudit flux le brome qu'il contient, ledit procédé comprenant le lavage dudit flux avec une solution aqueuse, **caractérisé en ce que** ledit lavage est mis en oeuvre avec, à titre de solution aqueuse, de la saumure appauvrie en sel, prélevée en aval des électrolyseurs d'une unité de production de chlore par électrolyse d'une saumure.

2. Procédé de purification selon la revendication 1, **caractérisé en ce que** ledit lavage à la saumure appauvrie en sel est mis en oeuvre à contre-courant ; avantageusement sur un flux ascendant de chlore gazeux.

3. Procédé de purification selon l'une des revendications 1 ou 2, **caractérisé en ce que** ladite saumure appauvrie est utilisée, pour ledit lavage, à une température comprise entre 10°C et 35°C et de préférence, à une température comprise entre 15 et 20°C.

4. Procédé de purification selon l'une quelconque des revendications 1 à 3, **caractérisé en ce qu'**il comprend, en outre, en aval dudit lavage, la séparation par stripage du brome et du chlore contenue dans ladite saumure appauvrie ; ledit stripage étant notamment mis en oeuvre avec de la vapeur d'eau sous vide ou avec un gaz, avantageusement de l'air.

5. Procédé de purification selon l'une quelconque des revendications 1 à 4, **caractérisé en ce qu'**il est mis en oeuvre sur le site d'une unité de production de chlore par électrolyse d'une saumure.

6. Procédé de purification selon la revendication 5, **caractérisée en ce que** ladite saumure appauvrie, prélevée sur ladite unité, est refroidie avant la mise en oeuvre dudit lavage et **en ce que** ladite saumure appauvrie, chargée en chlore et en brome à l'issue dudit lavage, est strippée ; les calories provenant du refroidissement de ladite saumure appauvrie étant avantageusement utilisées pour la mise en oeuvre dudit stripage.

7. Procédé de purification selon l'une quelconque des revendications 4 à 6, **caractérisé en ce que** ladite saumure appauvrie, après ledit stripage, est recyclée en amont desdits électrolyseurs ; au moins une purge étant prévue sur le circuit de recyclage de ladite saumure appauvrie.

8. Dispositif convenant à la mise en oeuvre du procédé de purification selon l'une quelconque des revendications 5 à 7, **caractérisé en ce qu'**il comporte :
- une unité de production de chlore gazeux par électrolyse d'une saumure, ladite unité comprenant des électrolyseurs (3) ;
- une colonne de lavage (5) dudit chlore gazeux produit ;
- un circuit d'amenée d'une fraction de la saumure appauvrie en sel, prélevée en aval desdits électrolyseurs (3), dans ladite colonne de lavage (5).

9. Dispositif selon la revendication 8, **caractérisé en ce que** ladite colonne de lavage (5) est agencée pour mettre en oeuvre ledit lavage à la saumure appauvrie à contre-courant ; le circuit d'amenée de ladite saumure appauvrie débouchant avantageusement en partie haute de ladite colonne (5).

10. Dispositif selon l'une des revendications 8 ou 9, **caractérisé en ce qu'**il comprend en outre une unité de stripage (7) de ladite fraction de saumure appauvrie en sel, chargée en chlore et en brome, issue de ladite colonne de lavage (5).

11. Dispositif selon la revendication 10, **caractérisé en ce qu'**il comprend en outre un échangeur de chaleur (E1), agencé sur ledit circuit d'amenée de ladite fraction de saumure appauvrie à ladite colonne de lavage (5), destinée à refroidir ladite fraction de saumure appauvrie et à réchauffer la fraction de saumure appauvrie correspondante issue de ladite colonne de lavage (5) avant son entrée dans ladite unité de stripage (7).

12. Dispositif selon l'une des revendications 10 ou 11, **caractérisé en ce qu'**il comprend en outre un circuit de recyclage de la saumure appauvrie issue de ladite unité de stripage (7) vers l'amont des électrolyseurs (3); au moins un dispositif de purge d'une fraction de la saumure recyclée étant prévue sur ledit circuit de recyclage.

## Patentansprüche

1. Verfahren zur Reinigung eines Stroms von gasförmigem Chlor zur Entfernung des in diesem Strom enthaltenem Brom, wobei das Verfahren die Spülung des Stromes mit einer wässrigen Lösung umfaßt, **dadurch gekennzeichnet, daß** die Spülung mit einer an Salz verarmten Sole als wässrige Lösung durchgeführt wird, die stromabwärts von den Elektrolyseuren aus einer Einheit zur Herstellung von Chlor durch Soleelektrolyse entnommen wird.

2. Reinigungsverfahren nach Anspruch 1, **dadurch gekennzeichnet, daß** die Spülung mit der an Salz verarmten Sole im Gegenstrom durchgeführt wird, vorteilhafterweise an einem aufsteigenden Strom von gasförmigem Chlor.

3. Reinigungsverfahren nach einem der Ansprüche 1 oder 2, **dadurch gekennzeichnet, daß** die verarmte Sole bei einer Temperatur zwischen 10°C und 35°C und vorzugsweise bei einer Temperatur zwischen 15 und 20°C für die Spülung verwendet wird.

4. Reinigungsverfahren nach einem der Ansprüche 1 bis 3, **dadurch gekennzeichnet, daß** es außerdem stromabwärts von der Spülung die Abtrennung des in der verarmten Sole enthaltenen Brom und Chlor durch Strippen umfaßt; wobei das Strippen insbesondere mit Wasserdampf im Vakuum oder mit einem Gas, vorteilhafterweise mit Luft erfolgt.

5. Reinigungsverfahren nach einem der Ansprüche 1 bis 4, **dadurch gekennzeichnet, daß** es am Standort einer Einheit zur Herstellung von Chlor durch Soleelektrolyse durchgeführt wird.

6. Reinigungsverfahren nach Anspruch 5, **dadurch gekennzeichnet, daß** die an der Einheit entnommene verarmte Sole vor der Durchführung der Spülung abgekühlt wird und daß die verarmte Sole, die am Ausfluß der Spülung mit Chlor und Brom beladen ist, gestrippt wird; wobei die Wärme, die von der Abkühlung der verarmten, Sole stammt vorteilhafterweise für die Durchführung des Strippens verwendet wird.

7. Reinigungsverfahren nach einem der Ansprüche 4 bis 6, **dadurch gekennzeichnet, daß** die verarmte Sole nach dem Strippen flussaufwärts zu den Elektrolyseuren rezykliert wird., wobei wenigstens ein Ablaß im Rezyklierungskreislauf der verarmten Sole vorgesehen ist.

8. Vorrichtung zur Durchführung des Reinigungsverfahrens nach einem der Ansprüche 5 bis 7 **dadurch gekennzeichnet, daß** sie folgendes umfaßt:
- eine Einheit zur Herstellung von gasförmigem Chlor durch Soleelektrolyse, wobei die Einheit Elektrolyseure (3) umfaßt.
- einen Rieselturm (5) für die Spülung des hergestellten gasförmigen Chlors
- einen Zustrom einer Fraktion der an Salz verarmten Sole, die stromabwärts von den Elektrolyseuren (3) entnommen wurde in den Rieselturm (5)

9. Vorrichtung nach Anspruch 8, **dadurch gekennzeichnet, daß** der Rieselturm (5) die Spülung der verarmten Sole im Gegenstrom durchführen kann, wobei der Zustrom für die verarmte Sole vorteilhafterweise am oberen Teil der Säule (5) einmündet.

10. Vorrichtung nach einem der Ansprüche 8 oder 9, **dadurch gekennzeichnet, daß** sie außerdem eine Stripping-Einheit (7) für die mit Chlor und Brom beladene Fraktion der an Salz verarmten Sole umfaßt, die aus dem Rieselturm (5) austritt.

11. Vorrichtung nach Anspruch 10, **dadurch gekennzeichnet, daß** sie außerdem einen Wärmetauscher (E1) umfaßt, der im Zustrom der Fraktion der verarmten Sole zum Rieselturm (5) angeordnet ist, zur Abkühlung der Fraktion der verarmten Sole und zur Wiedererwärmung der entsprechenden Fraktion verarmter Sole, die aus dem Rieselturm (5) vor ihrem Eintritt in die Stripping-Einheit (7) ausgetreten ist.

12. Vorrichtung nach einem der Ansprüche 10 oder 11, **dadurch gekennzeichnet, daß** sie außerdem einen Rezyklierungskreislauf für die verarmte Sole umfaßt, die aus der Stripping-Einheit (7) stromaufwärts zu den Elektrolyseuren (3) austritt und daß wenigstens eine Ablaßvorrichtung einer Fraktion der rezyklierten Sole in dem Rezyklierungskreislauf vorgesehen ist.

## Claims

1. A method for purifying a flow of gaseous chlorine, aimed at removing from said flow the bromine contained therein, said method including the washing of said flow with an aqueous solution, **characterised in that** said washing is carried out using, as the aqueous solution, salt-depleted brine, extracted downstream of the electrolysers of a brine electrolysis-based chlorine production unit.

2. The purifying method according to Claim 1, **characterised in that** said washing with salt-depleted brine is carried out countercurrently; advantageously on an upward flow of gaseous chlorine.

3. The purifying method according to one of Claims 1 or 2, **characterised in that** said depleted brine is used, for said washing, at a temperature of between 10°C and 35°C and preferably, at a temperature of between 15°C and 20°C.

4. The purifying method according to any one of Claims 1 to 3, **characterised in that** it further includes, downstream of said washing, the separation of the bromine and the chlorine contained in said depleted brine by stripping; said stripping being notably carried out using water vapour under vacuum or a gas, advantageously air.

5. The purifying method according to any one of Claims 1 to 4, **characterised in that** it is carried out at the site of a brine electrolysis-based chlorine production unit.

6. The purifying method according to Claim 5, **characterised in that** said depleted brine, extracted from said unit, is cooled before said washing is carried out and **in that** said depleted brine, loaded with chlorine and bromine at the end of said washing, is stripped; the calories resulting from the cooling of said depleted brine being advantageously used to carry out said stripping.

7. The purifying method according to any one of Claims 4 to 6, **characterised in that** said depleted brine is recycled, after said stripping, upstream of said electrolysers; at least one purging operation being provided on the circuit for recycling said depleted brine.

8. A device for carrying out the purifying method according to any one of Claims 5 to 7, **characterised in that** it comprises:
- a brine electrolysis-based gaseous chlorine production unit, said unit including electrolysers (3);
- a washing column (5) for said produced gaseous chlorine;
- a stream for feeding a fraction of the salt-depleted brine, extracted downstream of said electrolysers (3), into said washing column (5).

9. The device according to Claim 8, **characterised in that** said washing column (5) is arranged to carry out said washing with the depleted brine countercurrently; the stream for feeding said depleted brine leading advantageously into the upper part of said column (5).

10. The device according to one of Claims 8 or 9, **characterised in that** it further includes a stripping unit (7) for said fraction of salt-depleted brine, loaded with chlorine and bromine, exiting from said washing column (5).

11. The device according to Claim 10, **characterised in that** it further includes a heat exchanger (E1), arranged on said stream for feeding said fraction of depleted brine to said washing column (5), for cooling said fraction of depleted brine and for heating the corresponding fraction of depleted brine exiting from said washing column (5) prior to its entry into said stripping unit (7).

12. The device according to one of Claims 10 or 11, **characterised in that** it further includes a circuit for recycling the depleted brine exiting from said stripping unit (7) upstreamwards of the electrolysers (3); at least one device for purging a fraction of the recycled brine being provided on said recycling circuit.
